# EUROPEAN PATENT SPECIFICATION

(11) **EP 3 369 508 B1**
(45) Date of publication and mention of the grant of the patent: **01.04.2020**
(21) Application number: 18159309.6
(22) Date of filing: 28.02.2018
(51) Int. Cl.: B23D 45/04, B23D 47/08

(54) **A CUTTING MACHINE FOR CUTTING PROFILED ELEMENTS**
SCHNEIDMASCHINE ZUM SCHNEIDEN VON PROFILELEMENTEN
MACHINE DE COUPE POUR LA COUPE D'ÉLÉMENTS PROFILÉS

(30) Priority: 03.03.2017 IT 201700024213
(43) Date of publication of application: 05.09.2018
(73) Proprietor: Emmegi S.P.A., 41019 Soliera (Modena) (IT)
(72) Inventor: PALTRINIERI, Giovanni, 41126 Modena (IT)
(74) Representative: Casadei, Giovanni

(56) References cited:
- EP-A1- 2 364 805
- EP-A1- 3 078 439
- DE-U1- 8 631 960

## Description

The present invention relates to a cutting machine for cutting profiled elements according to the preamble of claim 1.

The invention relates in particular to a machine provided with a circular blade the rotation axis of which can assume a horizontal orientation or an inclined orientation, through a variable angle, with respect to the horizontal orientation. The circular blade is solidly constrained to a carriage which can slide along a direction that is horizontal and perpendicular with respect to the rotation axis of the circular blade.

The machines of this type further comprise a work plane, destined to support the profiled element to be cut by means of appropriate blocking means. The circular blade, by means of the carriage to which it is solidly constrained, can displace between a first position, in which it does not intersect the work plane and does not act on the profiled element, and a second position, in which it intersects the work plane. In the motion from the first towards the second position the circular blade crosses the work plane and performs the cutting of the profiled element.

Considering the horizontal orientation of the rotation axis of the circular blade, in machines at present available it is not possible to adjust the height of the rotation axis of the circular blade with respect to the work plane. This significantly limits the cutting area of the circular blade, i.e. it limits the section that can usefully be cut by the circular blade within a restricted area.

A cutting machine according to the preamble of claim 1 is known from EP3078439A1.

Another example of prior art machine is known from document DE8631960.

This machine allows vertical displacement of the blade, but such solution allows only limited increase of the cutting area.

The object of the present invention is to provide a cutting machine for cutting profiled elements which enables obviating the limits of the currently available machines.

An advantage of the machine according to the present invention is that it enables a significant increase in the cutting area of the circular blade.

A further advantage of the machine according to the present invention is that it requires substantially the same space as the machines at present available, so that it can easily be used in existing plants without requiring special modifications or adaptation.

Further characteristics and advantages of the present invention will become more apparent in the following detailed description of an embodiment of the present invention, illustrated by way of non-limiting example in the attached figures, in which:

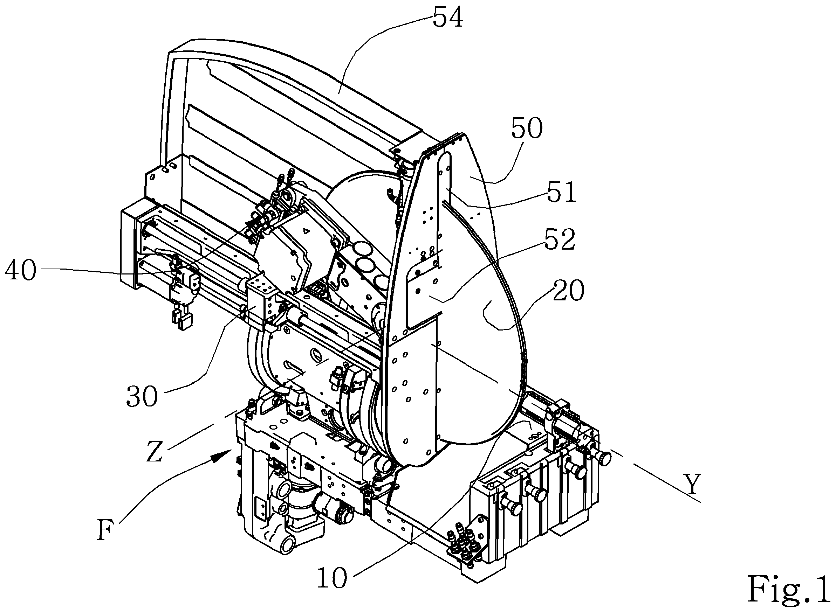

- figure 1 is an isometric view of the machine according to the present invention, in a first operating configuration;

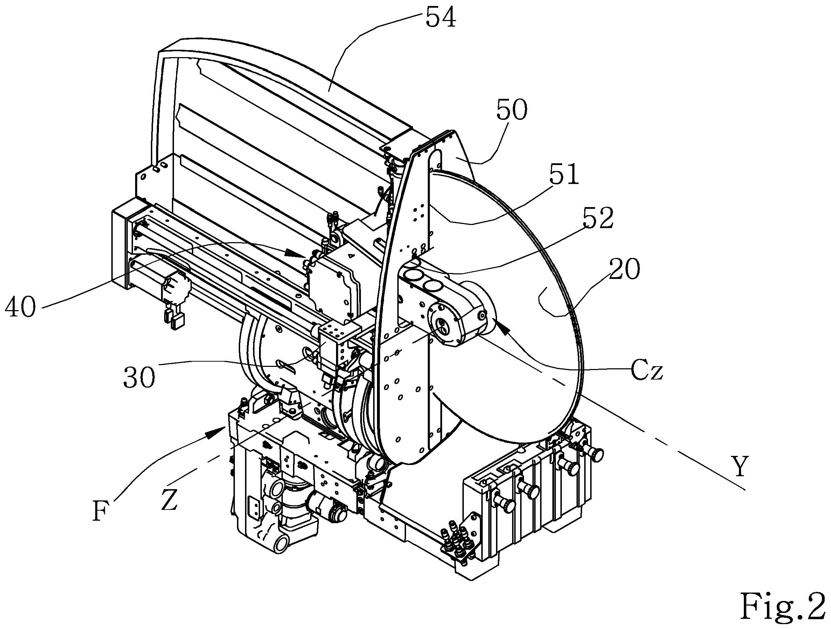

- figure 2 is an isometric view of the machine according to the present invention, in a second operating configuration;
- figure 3 shows the machine of figure 1 in section along plane A-A;
- figure 4 shows the machine of figure 2 in section along plane B-B;
- figure 5 schematically illustrates the comparison between two operating configurations of the machine;
- figure 6 schematically illustrates the comparison between a further operating configuration of the machine and the two operating configurations of figure 5.

The cutting machine for cutting profiled elements according to the present invention comprises a reference plane (10), structured for supporting a profiled element to be cut.

The reference plane (10) comprises, for example, a rest structure, configured for enabling resting the profiled element to be cut. The rest structure can be provided with centring elements, predisposed to allow a desired orientation of the profiled element, and blocking means for blocking the profiled element on the reference plane (10). The rest structure and the accessory devices can be associated to a main frame (F) of the machine. Both the reference means and the blocking means are known in the sector and are therefore not illustrated in further detail.

Preferably, though not necessarily, the reference plane (10) is horizontal.

The machine further comprises a circular blade (20), rotating about a rotation axis (X) and movable along a sliding direction (Y) perpendicular to the rotation axis (X). In general, it is preferable though not necessary for the profiled element to be arranged on the reference plane (10) so that the sliding direction (Y) is perpendicular to the longitudinal axis of the profiled element to be cut.

The circular blade (20) has a centre (C) of rotation. The centre (C) is located in a central zone (Cz) in which some transmission organs for transmitting the rotary motion are located, with the rotary motion being transmitted to the circular blade (20) by a suitable motor. The transmission organs comprise for example a cogged wheel that is integral and concentric with the circular blade (20) about which a cogged belt can be arranged, and a rotation pin. The central zone (Cz) thus has dimensions that must be taken into account in evaluating the cutting area available for the circular blade (20).

The circular blade (20) is movable along the sliding direction (Y) between a retracted position, in which it is distanced from the reference plane (10), i.e. it does not intersect the reference plane (10), and an advanced position in which it intersects the reference plane (10) and at least partially overlaps thereon. During the stroke between the retracted position and the advanced position, the circular blade (20) enters into contact with the profiled element and performs a cut.

To enable the sliding along the sliding direction (Y), the circular blade (20) is mounted on a carriage (30), in turn slidable along the sliding direction (Y) with respect to a main frame (F) of the machine. Actuating means are predisposed to produce the sliding of the carriage (30). In general, these are actuating means that are well known in the field and will therefore not be described in further detail.

The machine according to the present invention advantageously comprises adjusting means predisposed for varying the distance between the centre (C) of the circular blade (20) and the reference plane (10). The distance is measured along a straight line perpendicular to the reference plane (10), i.e. it is defined by the distance between the reference plane (10) and a straight line parallel to the reference plane (10) and passing through the centre (C) of the blade (20). In the preferred use of the machine, in which the reference plane (10) is horizontal, the adjusting means enable varying the height of the centre (C) of the circular blade (20) with respect to the reference plane (10).

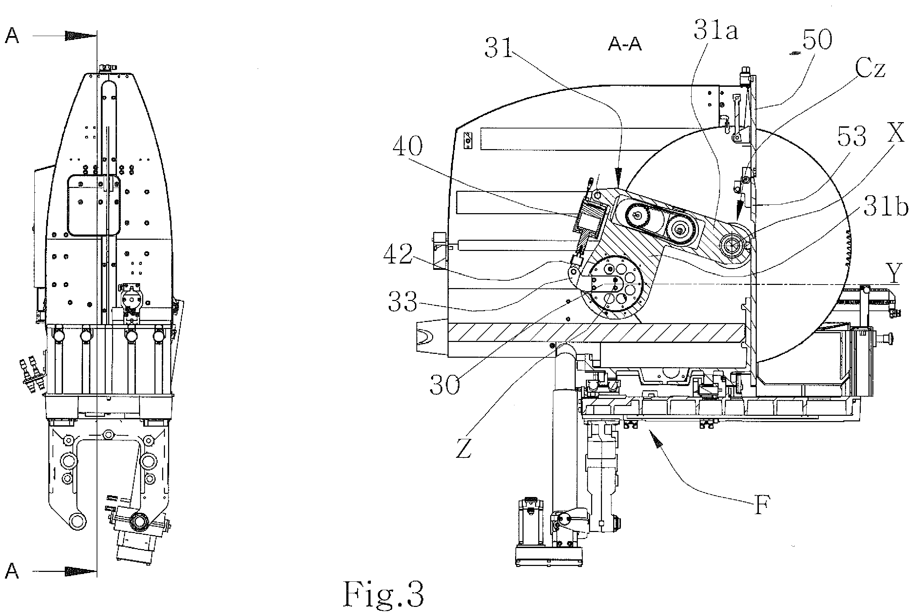

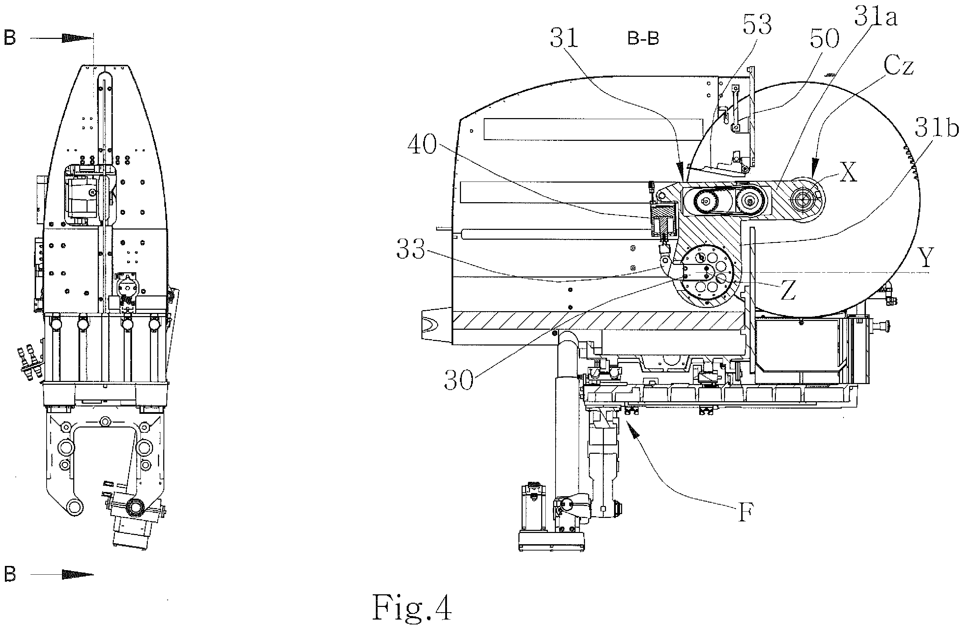

Using the adjusting means, the centre (C) of the blade (20) is movable between a lower position, in which it is at a shorter distance from the reference plane (10), and an upper position, in which it is at a greater distance from the reference plane (10). Figures 3 and 4 respectively illustrate the centre (C) of the blade (20) in the lower position and in the upper position, in both cases in the advanced position of the blade (20).

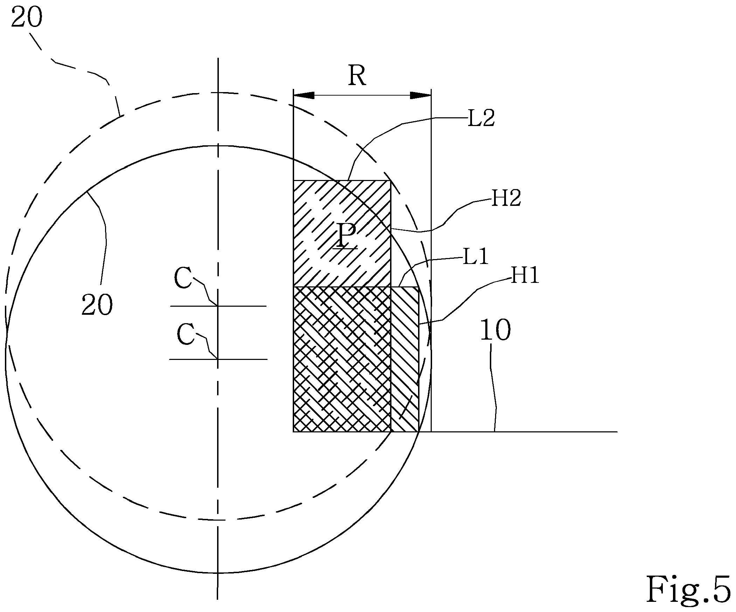

The possibility of varying the distance between the centre (C) of the blade (20) and the reference plane (10) enables increasing the cutting area of the circular blade (20) to a considerable extent. The advantage of the machine according to the invention is apparent from an examination of figure 5.

The border of the blade (20) in the lower position of the centre (C) is represented with a continuous line. The cutting area of the blade (20), for a given stroke (R) along the sliding direction (Y), is represented in a continuous line by the rectangle having width L1 and height H1. The dimensions of the rectangle are substantially determined by the diameter of the circular blade (20) and by the stroke (R) of the circular blade (20) along the sliding direction (Y).

The border of the blade (20) in the upper position of the centre (C) is represented with a broken line. The corresponding cutting area, represented by a broken line, has a greater height H2 and a smaller width L2 with respect to the lower position of the centre (C). The displacement of the centre (C) therefore leads to an increase in the cutting area corresponding to the rectangle denoted by P.

In a possible embodiment, not illustrated, the variation of the distance between the centre (C) of the blade (20) and the reference plane (10) is obtained by the displacement of the reference plane (10). In this case, the adjusting means are active on the reference plane (10) to vary the position thereof with respect to the centre (C) of the blade (20).

In the illustrated embodiment, an arm (31) connects the circular blade (20) to the carriage (30). The arm (31) is associated to the carriage (30) and can oscillate about an adjustment axis (Z) perpendicular to the sliding direction (Y) and parallel to the reference plane (10). Preferably, though not necessarily, the arm (31) has an angled conformation, in which a projecting portion (31a), to which the circular blade (20) is associated, is connected to an attachment portion (31b), pivoted to the carriage (30) about the adjustment axis (Z). In this embodiment, the central zone (Cz) of the blade is located substantially at the end of the projecting portion (31a). The projecting portion (31a) houses, internally thereof, at least a part of the transmission organs for transmitting the rotary motion to the circular blade (20) (figures 3 and 4 illustrate a cogged belt and a pair of intermediate wheels; a final portion of the transmission, which reaches up to the circular blade (20), is not visible).

The adjusting means are predisposed to vary the angular position of the arm (31). In particular, the arm (31) is movable between a lower position (figure 3), in which the centre (C) of the circular blade (20) is at a shorter distance from the reference plane (10), and an upper position (figure 4), in which the centre (C) of the circular blade (20) is at a greater distance from the reference plane (10).

In a possible, but not exclusive, embodiment, the adjusting means comprise a linear actuator (40) interposed between the arm (31) and the carriage (30). In the illustrated embodiment, the linear actuator comprises a hydraulic or pneumatic cylinder, which at a first end (41) is pivoted to the arm (31), while at a second end (42) it is pivoted to an appendage (33) of the carriage (30). The linear actuator (40) can be controlled via the electronic control unit of the machine, which also controls the activation in rotation of the blade (20) and the stroke of the carriage (30) along the sliding direction (Y).

According to the invention, the projecting portion (31a) of the arm (31), in the upper position, has an orientation that is parallel to the sliding direction (Y). In the illustrated embodiment, the orientation of the projecting portion (31a) in the upper position is substantially horizontal.

For safety reasons, the machine according to the present invention comprises a barrier (50), arranged flanked to the reference plane (10) at the side where the carriage (30) and the arm (31) are located. The barrier (50) separates the reference plane (10) from the blade (20), when the blade (20) is located in the retracted position thereof. This allows free access to the reference plane (10), with no risk of entering into contact with the blade (20).

According to the invention, the barrier (50) has a slot (51), structured for enabling passage of the circular blade (20). In this way, when in the retracted position, the blade (20) is separated from the reference plane (10) by means of the barrier (50). As it displaces towards the advanced position, in order to cut the profiled element, the blade (20) projects from the barrier (50) through the slot (51).

In the illustrated embodiment, the barrier (50) defines a limit for the forward stroke of the blade (20) in the lower position of the centre (C). The blade (20) can advance up to a position in which the central zone (Cz) is in proximity of the barrier (50), without being able to pass beyond. According to the invention, the barrier (50) is provided with a window (52), structured for enabling passage of the projecting portion (31a) of the arm (31). This enables increasing the stroke available to the blade (20), as the central zone (Cz) can pass beyond the barrier (50). For safety reasons, the window (52) can be provided with a hatch door (53), activatable to a closed position which prevents access to the window (52) when the blade (20) is in the retracted position.

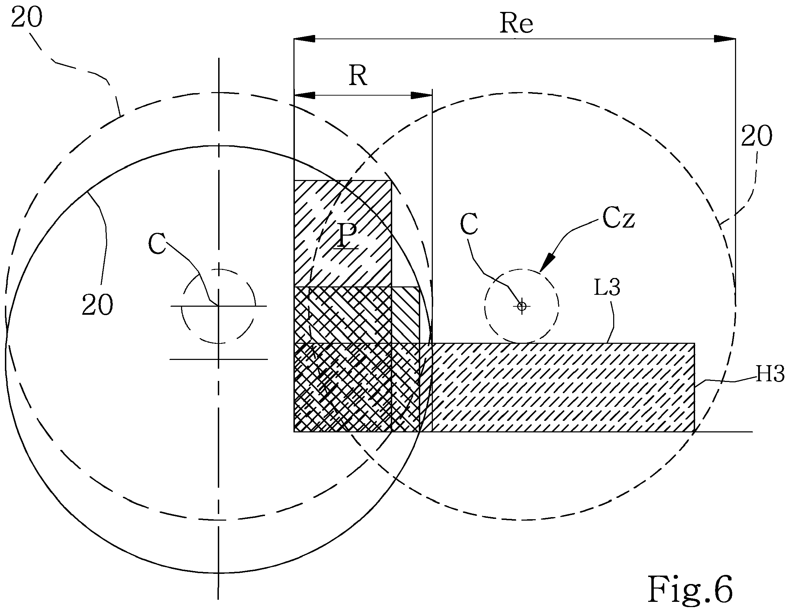

The possibility of varying the distance between the centre (C) of the blade and the reference plane (10), together with the possibility of increasing the stroke available to the blade (20) by causing the central zone (Cz) to project beyond the barrier (50), enables varying the shape of the cutting area of the blade, i.e. it enables modifying the ratio between height and width of the cutting area. In particular, a cutting area can be obtained the height of which is lower than the height of the central zone (Cz), and the width of which can be proportionally extended to the extension of the stroke of the blade (20). The extension of the width of the cutting area is illustrated in figure 6. The extended stroke of the blade is denoted by "Re". The modified cutting area has width "L3" and height "H3". As the central zone (Cz) of the blade (20) projects beyond the barrier (50) and is located above the reference plane (10), the height H3 of the cutting area must be lower than the height of the central zone (Cz) of the blade. The width L3 of the cutting area can instead be extended as required, up to the maximum limit stroke of the blade (20).

## Claims

1. A cutting machine for cutting profiled elements, comprising:
a reference plane (10), structured for supporting a profiled element;
a circular blade (20), rotating about a rotation axis (X) and movable along a sliding direction (Y) perpendicular to the rotation axis (X);
adjusting means predisposed for varying the distance between the centre (C) of the circular blade (20) and the reference plane (10), wherein the distance is measured along a straight line perpendicular to the reference plane (10);
a carriage (30), movable along the sliding direction (Y);
an arm (31), which connects the circular blade (20) to the carriage (30) and is associated to the carriage (30) and which can oscillate about an adjustment axis (Z) perpendicular to the sliding direction (Y) and parallel to the reference plane (10); wherein the adjusting means are predisposed for varying the angular position of the arm (31);
wherein the arm (31) is movable between a lower position, in which the centre (C) of the circular blade (20) is at a shorter distance from the reference plane (10), and an upper position, in which the centre (C) of the circular blade (20) is at a greater distance from the reference plane (10);
**characterised in that:**
in the upper position, an end portion of the arm (31) to which the circular blade (20) is associated has an orientation that is parallel to the sliding direction (Y);
and **in that** the cutting machine further comprises a barrier (50) having a slot (51), structured for enabling passage of the circular blade (20), and a window (52), structured for enabling passage of an end portion of the arm (31) to which the circular blade (20) is associated.

2. The machine according to claim 1, wherein the reference plane (10) is horizontal and wherein the adjusting means are predisposed for varying the height of the centre (C) of the circular blade (20) with respect to the reference plane (10).

3. The machine according to claim 1, wherein the adjusting means comprise a linear actuator (40) interposed between the arm (31) and the carriage (30).

## Patentansprüche

1. Schneidmaschine zum Schneiden von Profilelementen, umfassend:
eine Referenzebene (10), die strukturiert ist, um ein Profilelement zu tragen;
ein Kreismesser (20), das sich um eine Rotationsachse (X) dreht und entlang einer Verschiebungsrichtung (Y) senkrecht zur Rotationsachse (X) bewegbar ist;
Justiermittel, die ausgelegt sind, um den Abstand zwischen der Mitte (C) des Kreismessers (20) und der Referenzebene (10) zu variieren, wobei der Abstand entlang einer geraden Linie gemessen wird, die senkrecht zur Referenzebene (10) angeordnet ist;
einen Wagen (30), der entlang der Verschiebungsrichtung (Y) verfahrbar ist;
einen Arm (31), der das Kreismesser (20) mit dem Wagen (30) verbindet und mit dem Wagen (30) assoziiert ist und der um eine Justierachse (Z) senkrecht zur Verschiebungsrichtung (Y) und parallel zur Referenzebene (10) schwingen kann, wobei die Justiermittel ausgelegt sind, um die Winkelposition des Arms (31) zu variieren,
wobei der Arm (31) zwischen einer unteren Position, in der die Mitte (C) des Kreismessers (20) einen kürzeren Abstand von der Referenzebene (10) aufweist, und einer oberen Position, in der die Mitte (C) des Kreismessers (20) einen größeren Abstand von der Referenzebene (10) aufweist, bewegbar ist, **dadurch gekennzeichnet, dass**
ein Endabschnitt des Arms (31), mit dem das Kreismesser (20) assoziiert ist, in der oberen Position eine Ausrichtung aufweist, die parallel zur Verschiebungsrichtung (Y) angeordnet ist,
und dadurch, dass die Schneidmaschine zudem einen Schlagbaum (50) mit einer Aussparung (51) umfasst, der strukturiert ist, um den Durchgang des Kreismessers (20) zu ermöglichen, und ein Fenster (52), das strukturiert ist, um den Durchgang eines Endabschnitts (31) des Arms zu ermöglichen, mit dem das Kreismesser (20) assoziiert ist.

2. Maschine nach Anspruch 1, wobei die Referenzebene (10) horizontal ist und wobei die Justiermittel ausgelegt sind, um die Höhe der Mitte (C) des Kreismessers (20) gegenüber der Referenzebene (10) zu variieren.

3. Maschine nach Anspruch 1, wobei die Justiermittel einen Linearantrieb (40) umfassen, der zwischen dem Arm (31) und dem Wagen (30) eingesetzt ist.

## Revendications

1. Machine à découper pour la découpe d'éléments profilés, comprenant :
un plan de référence (10), structuré pour supporter un élément profilé ;
une lame circulaire (20), tournant autour d'un axe de rotation (X) et mobile le long d'une direction de coulissement (Y) perpendiculaire à l'axe de rotation (X) ;
des moyens de réglage prédisposés pour varier la distance entre le centre (C) de la lame circulaire (20) et le plan de référence (10), dans laquelle la distance est mesurée le long d'une ligne droite perpendiculaire au plan de référence (10) ;
un chariot (30), mobile le long de la direction de coulissement (Y) ;
un bras (31), reliant la lame circulaire (20) au chariot (30) et étant associé au chariot (30) et pouvant osciller autour d'un axe de réglage (Z) perpendiculaire à la direction de coulissement (Y) et parallèle au plan de référence (10) ; dans laquelle les moyens de réglage sont prédisposés pour varier la position angulaire du bras (31) ;
dans laquelle le bras (31) est mobile entre une position inférieure, dans laquelle le centre (C) de la lame circulaire (20) est à une distance plus courte du plan de référence (10), et une position supérieure, dans laquelle le centre (C) de la lame circulaire (20) est à une distance plus grande du plan de référence (10) ; **caractérisée en ce que** :
dans la position supérieure, une partie d'extrémité du bras (31) auquel la lame circulaire (20) est associée a une orientation étant parallèle à la direction de coulissement (Y) ;
et **en ce que** la machine à découper comprend en outre une barrière (50) comportant une fente (51), structurée pour permettre le passage de la lame circulaire (20), et une fenêtre (52), structurée pour permettre le passage d'une partie d'extrémité du bras (31) à laquelle la lame circulaire (20) est associée.

2. Machine selon la revendication 1, dans laquelle le plan de référence (10) est horizontal et dans laquelle les moyens de réglage sont prédisposés pour varier la hauteur du centre (C) de la lame circulaire (20) par rapport au plan de référence (10).

3. Machine selon la revendication 1, dans laquelle les moyens de réglage comprennent un actionneur linéaire (40) interposé entre le bras (31) et le chariot (30).
